# Europäisches Patentamt

# European Patent Office

# Office européen des brevets

(19)

(11) Veröffentlichungsnummer: **0 207 391**
**B1**

(12) ## EUROPÄISCHE PATENTSCHRIFT

(45) Veröffentlichungstag der Patentschrift:
05.12.90

(51) Int. Cl.⁵: **G11B 5/84**

(21) Anmeldenummer: **86108402.8**

(22) Anmeldetag: **19.06.86**

(54) Verfahren zur Herstellung von magnetischen Aufzeichnungsträgern.

(30) Priorität: **25.06.85 DE 3522681**

(43) Veröffentlichungstag der Anmeldung:
**07.01.87 Patentblatt 87/2**

(45) Bekanntmachung des Hinweises auf die Patenterteilung:
**05.12.90 Patentblatt 90/49**

(84) Benannte Vertragsstaaten:
**DE FR GB NL**

(56) Entgegenhaltungen:
**DE-A- 2 752 219**
**DE-A- 3 128 005**

(73) Patentinhaber: **BASF Aktiengesellschaft,
Carl-Bosch-Strasse 38, D-6700 Ludwigshafen(DE)**

(72) Erfinder: **Grau, Werner, Dr., Tuchbleiche 5,
D-6712 Bobenheim-Roxheim(DE)**
Erfinder: **Kohl, Albert, Schloss-Strasse 26,
D-6711 Laumersheim(DE)**
Erfinder: **Kovacs, Jenoe, Dr., Kantstrasse 9,
D-6717 Hessheim(DE)**
Erfinder: **Balz, Werner, Dr., Kropsburgstrasse 44,
D-6703 Limburgerhof(DE)**
Erfinder: **Münzner, Wulf, Dr., Lorscher Ring 10,
D-6710 Frankenthal(DE)**

## Beschreibung

Die Erfindung betrifft ein Verfahren zur Herstellung von magnetischen Aufzeichnungsträgern mit verbesserten Dauerlaufeigenschaften.

Bei der Aufnahme und Wiedergabe von Signalen mittels magnetischer Aufzeichnungsträger, welche im Kontakt über den Magnetkopf geführt und zudem noch über Umlenkrollen oder andere Führungselemente bewegt werden, treten je nach Ausbildung der Schicht unter Umständen sehr hohe Reibungskräfte auf. Außerdem stellt der Abrieb bei der Benutzung solcher Aufzeichnungsträger nicht nur hinsichtlich der Lebensdauer, sondern auch bezüglich der Betriebssicherheit ein Problem dar. Es ist daher üblich, den Schichtzusammensetzungen von magnetischen Aufzeichnungsträgern Gleitmittel zuzusetzen. Als geeignete Gleitmittel sind für diesen Zweck bereits eine große Anzahl verschiedener Gleitmittel, wie Polydimethylsiloxane, Paraffinöle, Wachse, gesättigte und ungesättigte Fettsäuren, Fettsäureester, Fettsäureamide, Salze von Fettsäuren, ferner feste Schmierstoffe, wie Molybdänsulfid, Graphit, Polytetrafluorethylenpulver und Polytrichlorfluorethylenpulver beschrieben. Auch wird angegeben, daß flüssige bzw. pastenförmige Gleitmittel gegenüber den festen Gleitmitteln den Vorteil besitzen, die zu schmierenden Oberflächen mit einem homogenen dünnen Oberflächenfilm zu bedecken, wobei die mengenmäßige Zugabe an Gleitmittel sehr gering gehalten werden muß, da sonst die Oberfläche leicht klebrig wird. Diese flüssigen Gleitmittel können jedoch häufig nicht als alleiniges Gleitmittel verwendet werden und werden deshalb mit festen oder pastenförmigen Gleitmitteln kombiniert. Bei ausschließlicher Verwendung von flüssigen Gleitmitteln lassen sich bei vielen Anwendungsgebieten, insbesondere bei längerer Benutzungsdauer und ungünstiger Klimabedingungen weder das Sticken noch das Blocken und Verkleben der Bänder dauerhaft vermeiden. Es wurde auch schon vorgeschlagen, dünne gleitfähige Materialien aufweisende Schichten auf die Oberflächen der Magnetschichten aufzubringen. Diese weisen jedoch den Nachteil auf, daß sie, um den Abstandseffekt der magnetischen Aufzeichnung so gering wie möglich zu halten, sehr dünn sein müssen und deshalb schnell von den Magnetköpfen abgerieben werden, dadurch ihre Wirkung verlieren und zusätzlich die Magnetköpfe verschmutzen. Um diesen Nachteil auszugleichen wurde auch bereits vorgeschlagen (DE-AS 15 72 438), einen Molybdändisulfid und Graphitpulver aufweisenden Belag auf die Magnetschicht aufzubringen. Doch stören auch hierbei die Abstandverluste. In dem weiteren Bemühen, die Abriebseigenschaften von Magnetschichten zu verbessern, wurde die Einarbeitung meist sphärischer, unmagnetischer harter Teilchen in die Magnetschicht bekannt (u.a. DE-OS 31 28 004 und DE-OS 33 28 719).

Durch statistische Verteilung der sphärischen Stoffe gelangen diese an die Oberfläche der magnetischen Schichten und schützen die Oberschicht vor dem Angriff des Aufnahme- und Lesekopfes. Da aber diese unmagnetischen Stoffe in der Magnetschicht verteilt sind, führen sie zu einer Erniedrigung der Brandremanenz und zur Erhöhung des Teilchenrauschens. Die Folge ist die Verschlechterung der Audio-, Video- und Datenmedieneigenschaften. Um die Remanenzverluste möglichst niedrig zu halten, ist auch versucht worden (DE-OS 1 953 459), die abrasiv wirkenden Stoffe nur in die äußerste Schicht einzubauen. Auf bestimmten Gebieten wie beispielsweise bei Videobändern spielt gerade die dünne äußere Schicht eine entscheidende Rolle für die Bildqualität, so daß kleine Remanenzverluste schon eine deutliche Verschlechterung der S/N-Werte zur Folge haben.

Es bestand daher die Aufgabe, ein Verfahren bereitzustellen, bei dem sich die Abriebs- und Dauerlaufeigenschaften von magnetischen Aufzeichnungsschichten unter Vermeidung der vorbekannten Nachteile, wie Verringerung der remanenten Magnetisierung, Abstandseffekt und Schmierneigung, verbessern zu lassen.

Es wurde nun gefunden, daß sich die Aufgabe in überraschend einfacher Weise lösen läßt, wenn auf die Oberfläche der Magnetschicht des magnetischen Aufzeichnungsträgers eine Dispersion von anorganischen Teilchen mit einer Korngröße zwischen 0,01 bis 3,0 µm in einem Lösungsmittel aufgetragen und daran anschließend das Lösungsmittel entfernt wird, wobei die Konzentration der anorganischen Teilchen in der Dispersion 0,02 bis 0,25 Gew.-%, bezogen auf das Lösungsmittel, beträgt.

Die nach dem erfindungsgemäßen Verfahren auf die Oberfläche der Speicherschicht eines üblichen aus einem unmagnetischen Trägermaterial und mindestens einer darauf haftfest aufgebrachten Magnetschicht bestehenden Aufzeichnungsträgers aufgetragene Dispersion der anorganischen Teilchen in einem flüchtigen Lösungsmittel wird in an sich bekannter Weise hergestellt. Besonders geeignete anorganische Teilchen mit einer Korngröße zwischen 0,01 und 3,0 µm, bevorzugt zwischen 0,02 und 2,0 µm, welche kugelförmig sind oder eine gedrungene Nadelform zeigen, weisen eine Mohs'sche Härte von größer gleich 5 auf. Hierfür eignen sich beispielsweise entsprechende aus Calciumcarbonat, Aluminiumoxid, Chromoxid, Zirkonoxid, Siliciumdioxid, Titandioxid und Silikaten bestehende Teilchen.

Diese Teilchen werden zur Herstellung der Dispersion in üblichen Dispergiereinrichtungen, wie Kugelmühlen, Rührwerkskugelmühlen und Mahlkesseln, in dem Lösungsmittel dispergiert. Dabei beträgt die Konzentration der Teilchen bezogen auf die Menge Lösungsmittel 0,02 bis 0,25 Gew.-%, vorzugsweise 0,03 bis 0,1 Gew.%. Eine ausreichende Verteilung der Teilchen ist im allgemeinen in 2 bis 5 Stunden erreicht.

Als Lösungsmittel eignen sich sowohl organische Lösungsmittel als auch Wasser. Die eingesetzten Lösungsmittel sollen gegenüber der Magnetschicht eine geringe Oberflächenspannung aufweisen damit sie sich darauf einwandfrei verteilen, dürfen die Schicht jedoch nicht anlösen. Geeignet sind u.a. iso-Propanol, Methylethylketon, Toluol und ähnliche.

Bei der Herstellung der Dispersion hat es sich als besonders zweckmäßig herausgestellt, zusätzlich geringe Mengen Dispergierhilfsmittel, wie z.B. langkettige Phosphorsäureester, Acrylsäure-Copolymere sowie Fettsäuresalze oder -ester, einzusetzen. Dabei sind Mengen von 1 bis 5 Gew.-Teile, bezogen auf das anorganische Material, meist ausreichend. Auch ist es möglich außer dem Dispergierhilfsmittel kleine Mengen von organischen Polymeren, wie Polyurethan, Vinylchlorid-Vinylacetat-Copolymere, Polyvinylformale, Polyamide, Phenoxy- und Epoxyharze, Nitrocellulose und ähnliche einzusetzen.

Die agglomeratfreien Dispersionen werden mit Hilfe der üblichen Auftragstechniken auf die Oberfläche der magnetischen Aufzeichnungsträger aufgebracht. Beispielhaft seien der Messergießer, der Reverse-Roll-Coater oder der Kisscoater genannt. Bevorzugt wird der Auftrag mit glatten oder Gravure-Rollen. Nach dem Auftrag wird das Lösungsmittel durch Verdunsten entfernt.

Nach dem erfindungsgemäßen Verfahren entstehen auf der Oberfläche der magnetischen Aufzeichnungsträger keine kontinuierlichen Schichten. Vielmehr scheiden sich die anorganischen Teilchen bevorzugt in den Poren, Rillen oder taschenartigen Vertiefungen der Magnetschichtoberfläche ab. Sie schützen durch ihre statistische Verteilung die Magnetschicht gegen reibende Beanspruchung durch Magnetköpfe oder Führungselemente. Mit einer solchen Ausrüstung der Oberfläche der Magnetschicht wird die eigentliche Magnetschicht bei der Benutzung weniger beansprucht, so daß auch die Dauerlaufeigenschaften verbessert werden. Andererseits wird durch eine solche oberflächliche Ausrüstung der Magnetschicht nicht der Nachteil der abrasiven Wirkung von Magnetschichten, welche harte Teilchen in der Schicht enthalten, auf die Magnetköpfe erreicht.

Die oberflächliche Ausrüstung der Magnetschichten gemäß dem Verfahren der Erfindung läßt sich bei allen bekannten magnetischen Aufzeichnungsträgern sowohl vom Dispersionstyp, d.h. unmodifizierte und modifizierte Eisenoxide, Chromdioxid und ferromagnetische Metallteilchen enthaltende Poly merenschichten, als auch bei den nach bekannten Verfahren hergestellten homogenen Metallschichten durchführen.

Das erfindungsgemäße Verfahren sei anhand folgender Beispiele näher erläutert.

Beispiel 1

In einem Mahlkessel von 500 ml Inhalt mit einer Kugelfüllung von 350 ml auf der Basis Zirkoniumoxid mit einem Durchmesser von 1,0 bis 1,5 mm werden 30 Teile eines mikronisierten Calciumcarbonats mit einer Korngröße von 0,1 bis 0,5 µm, 270 Teile i-Propanol und 0,6 Teile eines Dispergierhilfsmittels auf Basis Methylpolyglykolacrylat/Methacrylsäure drei Stunden dispergiert. Anschließend wurden 80 Teile dieser Dispersion unter starkem Rühren in 7920 Teilen i-Propanol fein verteilt. Mit der so erhaltenen Dispersion wurde nach dem Filtrieren mit einer Rasterwalze ein Magnetband beschichtet und in einem Trockenkanal bei 60 bis 80°C getrocknet.

An dem so ausgerüsteten Magnetband wurde die dynamische Reibung, ausgedrückt durch die Reibungszahl µ, gemessen.

Die Reibungszahl wird durch Messen einer Zugkraft bestimmt, die ein über eine mit einer Umfangsgeschwindigkeit von 0,5 bzw. 2,4 cm/sec sich drehende Meßtrommel geführtes Magnetband durch Reibung erzeugt.

Die Meßtrommel ist eine Stahltrommel mit einer Oberflächenrauhigkeit von 0,15 µm und einem Durchmesser von 70 mm. Das Bandstück ist 25 cm lang und wird bei einem Bandzug von 20 cN mit einer Geschwindigkeit von 1 mm/sec. und einem Umschlingungswinkel von 180°C über die Trommel geführt. Der Zug an der Meßdose F ist ein Maß für die Reibungszahl µ und zwar nach $\mu = 1/\pi \cdot \ln F/20$. Die Messung wurde bei einer Temperatur von 23°C und 50 % rel. Feuchte durchgeführt. Die Ergebnisse sind in der Tabelle angegeben.

Beispiel 2

Es wurde wie in Beispiel 1 beschrieben verfahren, jedoch wurden der Dispersion noch 4 Teile Stearinsäure zugesetzt. Die Meßergebnisse sind in der Tabelle angegeben.

Vergleichsversuch

Es wurde die Reibungszahl an dem in den Beispielen 1 und 2 eingesetzten, jedoch oberflächlich nicht behandelten Magnetband bestimmt. Die Meßergebnisse sind in der Tabelle angegeben.

| Tabelle | Reibungszahl μ | |
| --- | --- | --- |
| | bei 0,5 cm/sec | bei 2,4 cm/sec |
| Beispiel 1 | 0,125 | 0,129 |
| Beispiel 2 | 0,112 | 0,112 |
| Vergleichsversuch | blockt | 0,422 |

**Patentansprüche**

1. Verfahren zur Herstellung von magnetischen Aufzeichnungsträgern durch Aufbringen einer magnetischen Speicherschicht auf ein nichtmagnetisches Trägermaterial und anschließendes Beschichten der Oberfläche der magnetischen Speicherschicht mit einer Dispersion von anorganischen Teilchen mit einer Korngröße von 0,01 bis 3,0 μm in einem Lösungsmittel, wobei die Konzentration der anorganischen Teilchen in der Dispersion 0,02 bis 0,25 Gew.-%, bezogen auf das Lösungsmittel, beträgt, sowie Entfernen des Lösungsmittels.

2. Verfahren gemäß Anspruch 1, dadurch gekennzeichnet, daß die anorganischen Teilchen eine Mohs'sche Härte von mindestens 5 aufweisen.

3. Verfahren gemäß Anspruch 1 oder 2, dadurch gekennzeichnet, daß die Dispersion aus den anorganischen Teilchen, einem Dispergierhilfsmittel, einem organischen Polymeren und einem flüchtigen Lösungsmittel besteht.

**Claims**

1. A process for the production of a magnetic recording medium by applying a magnetic storage layer to a non-magnetic base and subsequently coating the surface of the magnetic storage layer with a dispersion of inorganic particles having a particle size of from 0.01 to 3.0 μm in a solvent, wherein the concentration of the inorganic particles in the dispersion is from 0.02 to 0.25% by weight, based on the solvent, and removing the solvent.

2. A process as claimed in claim 1, wherein the inorganic particles have a Mohs' hardness of not less than 5.

3. A process as claimed in claim 1 or 2, wherein the dispersion consists of the inorganic particles, a dispersant, an organic polymer and a volatile solvent.

**Revendications**

1. Procédé de préparation de supports d'enregistrement magnétiques par application d'une couche-mémoire magnétique sur un matériau support non magnétique et ensuite enduction de la surface de la couche-mémoire magnétique avec une dispersion de particules inorganiques d'une grosseur de grains de 0,1 à 3,0 μm dans un solvant, la concentration inorganique dans la dispersion s'élevant à 0,02 à 0,25% en poids, rapportée au solvant, ainsi qu'élimination du solvant.

2. Procédé suivant la revendication 1, caractérisé par le fait que les particules inorganiques présentent une dureté MOH d'au moins 5.

3. Procédé suivant la revendication 1 ou 2, caractérisé par le fait que la dispersion de particules inorganiques est constituée d'un agent auxiliaire de dispersion, d'un polymère organique et d'un solvant volatil.